# EUROPÄISCHE PATENTSCHRIFT

(11) **EP 3 295 126 B1**
(45) Veröffentlichungstag und Bekanntmachung des Hinweises auf die Patenterteilung: **08.05.2019**
(21) Anmeldenummer: 16716010.0
(22) Anmeldetag: 23.03.2016
(51) Int. Cl.: G01C 21/16, G01S 19/49, G01C 21/36, G01D 1/14, G01C 21/20

(54) **VERFAHREN ZUM BESTIMMEN VON ZUSTÄNDEN EINES SYSTEMS MITTELS EINES SCHÄTZFILTERS**
METHOD FOR DETERMINING STATES OF A SYSTEM USING AN ESTIMATION FILTER
PROCÉDÉ POUR LA DÉTERMINATION D'ÉTATS D'UN SYSTÈME AU MOYEN D'UN FILTRE D'ESTIMATION

(30) Priorität: 08.05.2015 DE 102015107265
(43) Veröffentlichungstag der Anmeldung: 21.03.2018
(73) Patentinhaber: Northrop Grumman LITEF GmbH, 79115 Freiburg (DE)
(72) Erfinder: HERBERTH, Uwe, 79232 Hugstetten (DE); MARTIN, Tim, 79012 Freiburg (DE)
(74) Vertreter: Müller Hoffmann & Partner
(86) Internationale Anmeldenummer: PCT/EP2016/056389
(87) Internationale Veröffentlichungsnummer: WO 2016/180566

(56) Entgegenhaltungen:
- US-A1- 2007 265 741
- "Introduction to Inertial Navigation and Kalman Filtering", , 30. Oktober 2009 (2009-10-30), XP055260184, Gefunden im Internet: URL:http://www.navlab.net/Publications/Int roduction_to_Inertial_Navigation_and_Kalma n_Filtering.pdf [gefunden am 2016-03-22]
- Anonymous: "common-APM Navigation Extended Kalman Filter Overview | ArduCopter", , 7 April 2015 (2015-04-07), XP055498772, Retrieved from the Internet: URL:https://web.archive.org/web/2015040706 3600/http://copter.ardupilot.com/wiki/comm on-apm-navigation-extended-kalman-filter-o verview [retrieved on 2018-08-09]

## Beschreibung

Zur Bestimmung von Zuständen eines Systems werden häufig Zustandsdaten verwendet, die mit unterschiedlicher Methodik ermittelt wurden. Dabei sind die Zustandsdaten typischerweise mit Messfehlern behaftet, so dass gemessene Zustandsdaten von den tatsächlichen Zuständen abweichen. Zur Bestimmung der Zustände des Systems ist es also notwendig, einerseits die auf unterschiedliche Weise ermittelten Zustandsdaten miteinander zu kombinieren und andererseits die Verfälschung durch Messfehler zu reduzieren. Dazu werden häufig Schätzfilter eingesetzt, die basierend auf vorherigen Zustandsmessungen die Entwicklung des Systems extrapolieren und gleichzeitig eine Wahrscheinlichkeit dafür angeben, dass der so berechnete Zustand des Systems mit dem tatsächlichen Zustand übereinstimmt. Zur Rückkopplung an die gemessenen Daten werden die extrapolierten Zustände nach einer bestimmten Zeit mit gemessenen Zustandsdaten verglichen und korrigiert.

Ein solches Verfahren wird insbesondere zur Bestimmung von Positionsdaten eines Objekts, wie zum Beispiel eines Fahrzeugs, eines Schiffes oder eines Flugzeugs, verwendet. Hierbei werden relative und absolute Positionsdaten erhoben, aus denen der Schätzfilter eine Navigationslösung, d.h. zur Navigation nötige Positionsdaten, bestimmt. Als Schätzfilter wird dabei häufig ein Kalman-Filter verwendet, das iterativ Positionsdaten abschätzt und mit neu gemessenen Datensätzen korrigiert. Hierbei werden insbesondere inertiale Messdaten, d.h. Drehraten und Beschleunigungen des Objekts, und absolute Positionsdaten, d.h. die Position bezüglich eines fixen Referenzsystems, verwendet. Das Kalman-Filter erlaubt, diese beiden Arten von Positionsdaten für eine gemeinsame Navigationslösung auszuwerten. Typischerweise werden die relativen Positionsdaten zur Abschätzung der Position verwendet und die absoluten Daten zur Korrektur der Lösung.

Hierbei ist aber insbesondere der Korrekturschritt, d.h. das Update des Filters, besonders rechenintensiv. Sind zur Korrektur notwendige Daten kontinuierlich verfügbar, wird ein solcher Korrekturschritt typischerweise in konstanten Abständen ausgeführt. Ansonsten wird eine Korrektur immer dann ausgeführt, wenn die zur Korrektur nötigen Daten erhoben werden konnten. Dies sorgt für eine konstante Auslastung der zur Berechnung der Korrektur verwendeten Prozessoren und damit zu einem konstanten Energieverbrauch. Andererseits führt die kontinuierliche Korrektur zu einer höheren Genauigkeit des Filters. Wird aber eine solche hohe Genauigkeit nicht benötigt oder ist das Schätzfilter durch längeren Betrieb derart eingeschwungen, dass auch häufigere Korrekturen keine Qualitätsverbesserung mehr mit sich bringen, wird durch eine kontinuierliche Korrektur der zur Berechnung der Navigationslösung verwendete Prozessor unnötig belastet und es entsteht ein unnötig hoher Energieverbrauch.

Der Erfindung liegt die Aufgabe zugrunde, ein Verfahren zum Bestimmen von Zuständen eines Systems mittels eines Schätzfilters anzugeben, bei dem unnötige Belastungen eines Rechenprozessors und ein daraus resultierender Energieverbrauch reduziert werden.

Diese Aufgabe wird durch den Gegenstand der unabhängigen Patentansprüche gelöst. Vorteilhafte Weiterbildungen ergeben sich aus den Unteransprüchen.

Erfindungsgemäß umfasst ein Verfahren zum Bestimmen von Zuständen eines Systems mittels eines Schätzfilters: Bestimmen von ersten Zustandswerten durch Berechnen von Mittelwerten von jeweiligen Wahrscheinlichkeitsverteilungen für jeden der Zustände durch das Schätzfilter; Berechnen einer Abweichwahrscheinlichkeit dafür, dass die ersten Zustandswerte von den tatsächlichen Zuständen des Systems abweichen durch das Schätzfilter; Messen der Zustände des Systems als Zustandsdaten. Hierbei werden genau dann, wenn die Abweichwahrscheinlichkeit größer als ein Grenzwert ist, die ersten Zustandswerte mittels der Zustandsdaten korrigiert.

Es wird also mittels des Schätzfilters nicht nur eine Schätzung der Zustände vorgenommen, sondern über die Abweichwahrscheinlichkeit auch eine Güte der Schätzung berechnet. Die Schätzwerte werden nur dann korrigiert, wenn die Güte der Schätzung eine gewisse Schwelle unterschreitet. Dies soll dann gegeben sein, wenn die Abweichwahrscheinlichkeit, die den Abstand der Schätzung vom tatsächlichen Zustand des Systems angibt, größer als ein bestimmter Grenzwert wird. Der Grenzwert kann dabei fest vorgegeben oder dynamisch bestimmbar sein. Dadurch kann mittels des Grenzwerts die Güte der gesamten Zustandsbestimmung eingestellt werden. Darüber hinaus kann der Grenzwert für verschiedene Arten der Bestimmung der Abweichwahrscheinlichkeit unterschiedlich definiert werden.

Für Verwendungen, in denen eine hohe Güte nicht benötigt oder von untergeordneter Bedeutung ist, kann dadurch die Anzahl von Korrekturschritten reduziert werden, wodurch die Belastung eines zur Berechnung der Zustände genutzten Prozessors reduziert werden kann. Gleichzeitig sinkt durch die reduzierte Belastung auch der Energieverbrauch des Prozessors.

In dem Verfahren kann der erste Zustandswert in einem ersten Zeitschritt bestimmt werden. Dabei werden genau dann, wenn die Abweichwahrscheinlichkeit kleiner oder gleich dem Grenzwert ist, in einem dem ersten Zeitschritt folgenden zweiten Zeitschritt zweite Zustandswerte basierend auf den ersten Zustandswerten bestimmt. Dagegen werden die zweiten Zustandswerte in dem zweiten Zeitschritt genau dann basierend auf den korrigierten ersten Zustandswerten bestimmt, wenn die Abweichwahrscheinlichkeit größer als der Grenzwert ist.

Es wird also dann, wenn die Güte des Schätzwertes nicht mehr ausreichend hoch ist und die ersten Zustandswerte deshalb im ersten Zeitschritt korrigiert wurden, die Schätzung im zweiten Zeitschritt auf diese korrigierten Zustandswerte gestützt. Andererseits wird bei ausreichender Güte der Schätzung im ersten Zeitschritt keine Korrektur vorgenommen. Dann basiert die Schätzung im zweiten Zeitschritt auf den im ersten Zeitschritt geschätzten, nicht korrigierten ersten Zustandswerten.

Dadurch wird es möglich, die Schätzung mittels des Schätzfilters iterativ über mehrere Zeitschritte auszuführen, ohne eine Korrektur vornehmen zu müssen. Andererseits kann durch Abgleich mit der Abweichwahrscheinlichkeit die Korrektur dann durchgeführt werden, wenn die Schätzungen zu ungenau wird. Die auf die Korrektur folgende Schätzung hat dank der korrigierten Schätzwerte, auf denen sie beruht, eine erhöhte Genauigkeit. Es ist somit möglich, zum einen die Prozessorlast und den Energieverbrauch gering zu halten und zum anderen für eine genügend hohe Qualität der Schätzung zu sorgen.

Das Schätzfilter kann hierbei ein Kalman-Filter sein und die Zustände des Systems eine Position eines Objekts bestimmen. Dann sind die Zustandswerte Positionswerte, die die Position angeben und die gemessenen Zustandsdaten Positionsdaten.

Dadurch wird es möglich, Navigationslösungen für Fahrzeuge wie etwa Schiffe oder Flugzeuge zu bestimmen, die eine genügend hohe Präzision aufweisen, und gleichzeitig den Energieverbrauch zur Bestimmung der Navigationslösung gering zu halten. Dies ist unter anderem für Fluggeräte, wie etwa unbemannte Luftfahrzeuge ("unmanned aerial vehicles" UAV) oder unbemannte Luftfahrtsysteme ("unmanned aerial systems" UAS) von Vorteil, die lange Missions- oder Einsatzzeiten haben und einen geringen Energieverbrauch aufweisen müssen. In diesem Fall kann der Grenzwert zum Beispiel der maximal erlaubte horizontale Positionsfehler sein. Zudem können Missions- und Navigationsrechner von UAVs zusammengelegt werden, wodurch Gewicht gespart werden kann und längere Missions- oder Einsatzzeiten erreicht werden.

Die Positionsdaten können eine absolute Position des Objekts und relative Positionsänderungen des Objekts umfassen. Dabei werden die relativen Positionsänderungen verwendet, um den Mittelwert der Wahrscheinlichkeitsverteilung für die Position zu bestimmen, wohingegen die absolute Position verwendet wird, um Positionswerte zu korrigieren.

Dadurch lassen sich die verschiedenen gemessenen Positionsdaten optimal kombinieren. Die relativen Positionsänderungen, wie etwa Drehraten oder Beschleunigungen des Objekts werden verwendet, um basierend auf den vorherigen Schätzwerten die weitere Bewegung des Objekts abzuschätzen. Die absoluten Positionsdaten, die mit Bezug auf ein bestimmtes Referenzsystem, wie etwa Längen- und Breitengrade, angegeben werden, können benutzt werden, um die Schätzung zu korrigieren.

Andererseits fallen Messfehler der absoluten Positionsdaten zur Positionsbestimmung weniger stark ins Gewicht, da sie nur dann nicht als Messfehler erkannt werden, wenn die Schätzung mit ähnlichen Fehlern behaftet ist. Es werden also zwei verschiedene Arten der Positionsbestimmung miteinander kombiniert, um wechselweise den Einfluss von Messfehlern zu reduzieren. Gleichzeitig wird durch die Festlegung, dass eine Korrektur nur vorgenommen werden soll, wenn die Güte der Schätzung zu schlecht wird, garantiert, dass der Energieverbrauch bei der Positionsbestimmung gering bleibt.

Die Positionsdaten können mittels eines Satellitennavigationssystems und eines Linearbeschleunigungs- und/oder Drehratensensors gemessen werden. Dadurch wird gewährleistet, dass die Positionsdatenerfassung automatisiert ablaufen kann, wodurch eine ständige Überwachung oder eine aufwändige Bestimmung durch Menschen unnötig wird.

Zum Messen der Positionsdaten kann ein Mikro-Elektro-Mechanischer Sensor (MEMS) benutzt werden. Dadurch wird eine Miniaturisierung der zum Durchführen des Verfahrens notwendigen Geräte ermöglicht, die einen weiten Einsatzbereich des Verfahrens garantiert. Es können aber auch faseroptische Sensoren (z.B. faseroptische Kreisel) oder Ringlaserkreisel zum Messen der Positionsdaten benutzt werden.

Die Abweichwahrscheinlichkeit kann basierend auf einer Kovarianzmatrix der Wahrscheinlichkeitsverteilung bestimmt werden. Typischerweise werden derartige Kovarianzmatrizen in einem Schätzfilter, wie etwa einem Kalman-Filter, automatisch generiert. Damit kann die Berechnung der Abweichwahrscheinlichkeit ohne zusätzliche Prozessschritte in bereits bestehende Filter aufgenommen werden, so dass keine zusätzliche Prozessorlast oder ein zusätzlicher Zeitverlust auftritt.

Die Abweichwahrscheinlichkeit kann aber auch basierend auf einem Residuum, d.h. dem Vergleich der geschätzten und der gemessenen Position, bestimmt werden. Dies ermöglicht eine flexiblere Handhabung der Güteeinstellung, da es unter gewissen Umständen nötig sein kann, nicht allein auf die im Filter berechneten Kovarianzmatrizen abzustellen, sondern eine zweite Basis für die Bestimmung der Schätzgüte zu haben. Durch die alternative oder zusätzliche Verwendung eines Residuums wird also die Flexibilität des Einsatzes des Verfahrens vergrößert.

Eine Vorrichtung zum Bestimmen einer Position eines Objekts umfasst eine Messeinheit, die geeignet zum Messen von Positionsdaten ist und eine Recheneinheit mit einem Schätzfilter, die geeignet ist, erste Positionswerte durch Berechnen eines Mittelwerts einer Wahrscheinlichkeitsverteilung für die Position zu bestimmen und eine Abweichwahrscheinlichkeit dafür zu berechnen, dass die ersten Positionswerte von der tatsächlichen Position des Objekts abweichen. Dabei ist die Recheneinheit dazu geeignet, die ersten Positionswerte mittels der Positionsdaten genau dann zu korrigieren, wenn die Abweichwahrscheinlichkeit größer als der Grenzwert ist.

Durch diese Vorrichtung ist gewährleistet, dass ein erfindungsgemäßes Verfahren ausgeführt werden kann, durch das die Position eines Objekt bestimmt werden kann, ohne dass die Recheneinheit, z.B. ein Prozessor, unnötig belastet wird und ein unnötiger Energieverbrauch auftritt.

Die Messeinheit kann ein Satellitennavigationssystem und einen Linearbeschleunigungs- und/oder Drehratensensor umfassen. Dabei ist der Linearbeschleunigungs- und/oder Drehratensensor geeignet, relative Positionsänderungen zu messen, die verwendet werden, um den Mittelwert der Wahrscheinlichkeitsverteilung für die Position zu bestimmen. Andererseits ist das Satellitennavigationssystem geeignet, eine absolute Position zu messen, die verwendet wird, um Positionswerte zu korrigieren. Dadurch wird gewährleistet, dass die Vorrichtung eine möglichst breite Basis von Messwerten zur Positionsbestimmung verwendet, die mittels des Schätzfilters optimal kombiniert werden. Dadurch kann die benötigte Genauigkeit der Positionsbestimmung gleichzeitig mit einem reduzierten Energieverbrauch realisiert werden.

Ein unbemanntes Luftfahrtzeug oder ein unbemanntes Luftfahrtsystem kann nach den oben beschriebenen Verfahren arbeiten. Das unbemanntes Luftfahrtzeug oder das unbemanntes Luftfahrtsystem kann eine der oben beschriebenen Vorrichtungen aufweisen. Dadurch wird gewährleistet, dass die von diesen Luftfahrzeugen oder -systemen genutzten Navigationslösungen eine genügend hohe Präzision aufweisen, und gleichzeitig der Energieverbrauch zur Bestimmung der Navigationslösung gering gehalten wird. Durch geringen Energieverbrauch können zudem lange Missions- oder Einsatzzeiten der Luftfahrzeuge oder -systeme realisiert werden.

Im nachfolgenden werden anhand der Figuren Ausführungsformen der Erfindung, deren Funktionsweise sowie deren Vorteile beschrieben. Elemente der Ausführungsformen sind untereinander kombinierbar, sofern sie sich nicht ausschließen. Es zeigen
- **FIG. 1A und 1B**: Ausführungsformen von Vorrichtungen zum Bestimmen von Zuständen eines Systems mittels eines Schätzfilters;
- **FIG. 2**: ein Verfahren zum Bestimmen von Zuständen eines Systems mittels eines Schätzfilters gemäß einer Ausführungsform;
- **FIG. 3**: ein Verfahren zum Bestimmen von Zuständen eines Systems mittels eines Schätzfilters gemäß einer weiteren Ausführungs-form; und
- **FIG. 4**: ein Verfahren zum Bestimmen einer Position eines Objekts mittels eines Schätzfilters gemäß einer Ausführungsform.

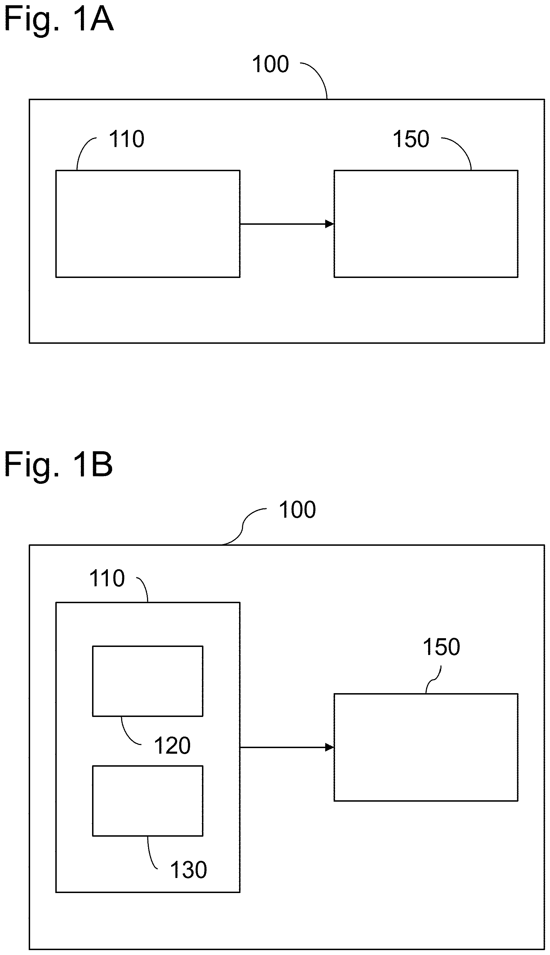

FIG. 1A zeigt eine Vorrichtung 100 zum Bestimmen von Zuständen eines Systems. Dazu weist die Vorrichtung 100 eine Messeinheit 110 und eine Recheneinheit 150 auf.

Die Messeinheit 110 ist geeignet, verschiedene Zustände des Systems zu messen und als Zustandsdaten auszugeben.

Die Recheneinheit 150, z.B. ein Computer oder ein Prozessor, berechnet basierend auf den Zustandsdaten, die von der Messeinheit 110 gemessen wurden, die Zustände des Systems. Dazu verwendet die Recheneinheit 150 ein Schätzfilter, d.h. einen Algorithmus, mit dem Zustandswerte abgeschätzt werden können.

Das Schätzfilter berechnet basierend auf den Zustandsdaten den Mittelwert einer Wahrscheinlichkeitsverteilung für die Zustände. Gleichzeitig bestimmt das Schätzfilter die Wahrscheinlichkeit dafür, dass die berechneten Mittelwerte für die Zustände von den tatsächlichen Zuständen des Systems abweichen.

Gemäß einer Ausführungsform kann aus dieser Abweichwahrscheinlichkeit ein Gütewert gebildet werden, der umso größer ist, je größer die Abweichung ist. Gemäß einer anderen Ausführungsform ist der Gütewert umso kleiner, je größer die Abweichung ist. Dann ist der Gütewert proportional zur Güte der Messung.

Basierend auf der Abweichwahrscheinlichkeit wird bestimmt, ob die vom Schätzfilter geschätzten Zustandswerte korrigiert werden oder nicht. Die Zustandswerte werden dann korrigieren, wenn die Abweichwahrscheinlichkeit größer als ein zuvor bestimmter Grenzwert ist.

Dadurch wird gewährleistet, dass eine rechenaufwändige Korrektur der Schätzwerte nur dann vorgenommen wird, wenn die Schätzung zu ungenau für eine weitere Verwendung wird, d.h. wenn die Güte der Schätzung zu gering wird. Das hat zur Folge, dass die Recheneinheit 150 nur dann Korrekturen der geschätzten Zustandswerte vornimmt, wenn dies tatsächlich notwendig ist. Dadurch wird eine Auslastung der Recheneinheit 150 und damit ihr Energieverbrauch reduziert.

Gemäß einer Ausführungsform sind die von der Vorrichtung 100 bestimmten Zustände abstrakte Größen, z.B. rein mathematische Parameter oder Parameter eines mathematischen Modells, etwa eines Wirtschaftsmodells. Gemäß einer weiteren Ausführungsform sind die Zustände konkrete Parameter eines Systems, z.B. konkrete Messergebnisse.

Gemäß einer Ausführungsform wird die Vorrichtung 100 benutzt, um eine Position eines Objekts zu bestimmen. Dazu misst die Messeinheit 110 Positionsdaten und das Schätzfilter der Recheneinheit 150 bestimmt Positionswerte durch Berechnen eines Mittelwerts einer Wahrscheinlichkeitsverteilung für die Position. Ist die Güte dieser Schätzung zu gering, d.h. ist eine Abweichwahrscheinlichkeit, die die Abweichung der Positionswerte von der tatsächlichen Position beschreibt, größer als ein Grenzwert, korrigiert das Schätzfilter die Positionswerte mittels weiteren von der Messeinheit 110 gemessenen Positionsdaten.

Dadurch wird es möglich, die oben beschriebene Entlastung der Recheneinheit 150 auch für die Berechnung von Positionsdaten und Navigationslösungen zu verwenden.

FIG. 1B zeigt die Vorrichtung 100 im weiteren Detail. Die Messeinheit 110 weist ein Satellitennavigationssystem 120 und einen Linearbeschleunigungs- und/oder Drehratensensor 130 auf.

Das Satellitennavigationssystem 120 kann dazu benutzt werden, eine absolute Position des Objekts auf der Erdoberfläche durch Triangulation zwischen mehreren im Erdorbit stationierten Satelliten zu bestimmen. Das Satellitennavigationssystem 120 misst also eine absolute Position des Objekts bezüglich der Erdoberfläche.

Der Linearbeschleunigungs- und/oder Drehratensensor 130 misst dagegen relative Positionsänderungen des Objekts, wie etwa Drehraten oder Beschleunigungen des Objekts. Es ist deshalb möglich, mittels der vom Linearbeschleunigungs- und/oder Drehratensensor 130 gemessenen Daten, die Bewegung des Objekts im Raum durch Integration der Bewegungsgleichungen zu errechnen. Bei dem Linearbeschleunigungs- und/oder Drehratensensor 130 kann es sich zum Beispiel um einen mikro-elektro-mechanischen Sensor (MEMS) handeln. Zum Messen der Drehraten können zudem auch faseroptische Sensoren (z.B. faseroptische Kreisel), Ringlaserkreisel und dergleichen verwendet werden.

In der Recheneinheit 150 werden die relativen Positionsänderungen dazu benutzt, die Position des Objekts abzuschätzen. Da jede Messung mit einem Messfehler behaftet ist, ist es nicht möglich, die Position exakt zu berechnen. Sie kann im Rahmen der Messgenauigkeit nur geschätzt werden. Da sich im Laufe der Zeit die verschiedenen Messfehler kumulieren, wird auch die Schätzung im Laufe der Zeit immer ungenauer. Es ist deshalb notwendig, die Schätzung zu korrigieren, um Genauigkeitsanforderungen zu erfüllen.

Dazu werden die absoluten Positionsdaten verwendet, die mit den vom Schätzfilter errechneten geschätzten Positionswerten verglichen werden. Auf diese Weise ist es möglich, Messfehler der relativen Positionsänderungen mittels absoluter Positionsmessungen auszugleichen.

Andererseits kann auch die absolute Positionsmessung fehlerbehaftet sein. Dies fällt aber nur dann ins Gewicht, wenn die auf den relativen Positionsänderungen basierende Schätzung die gleiche Fehlertendenz hat. Da Messfehler aber statistisch schwanken, wird dies in der Regel nicht der Fall sein. Deshalb kann auch die Schätzung zur Korrektur von Messfehlern der absoluten Positionsmessung verwendet werden.

Gemäß einer Ausführungsform berechnet das Schätzfilter automatisch die Varianzen und Kovarianzen der Mittelwerte. Je größer die Einträge der sich ergebenden Kovarianzmatrix sind, desto schlechter wird die Schätzung sein. Sind die Einträge dahingegen klein, ist es nicht notwendig, die Schätzung zu korrigieren. Dadurch wird gewährleistet, dass keine unnötigen Korrekturschritte ausgeführt werden, die die Recheneinheit 150 unnötig belasten und zu einem unnötigen Energieverbrauch führen.

Gemäß einer weiteren Ausführungsform kann alternativ oder ergänzend ein Residuum als Abweichwahrscheinlichkeit benutzt werden, das die Abweichung der geschätzten Daten von der durch Messung bestimmten Position angibt. Auch damit kann verhindert werden, dass unnötige Korrekturschritte ausgeführt werden, wenn die Schätzung noch genügend gut ist.

Im Folgenden werden verschiedene Verfahren angegeben, mit denen die Vorrichtung 100 Zustände eines Systems bestimmen kann.

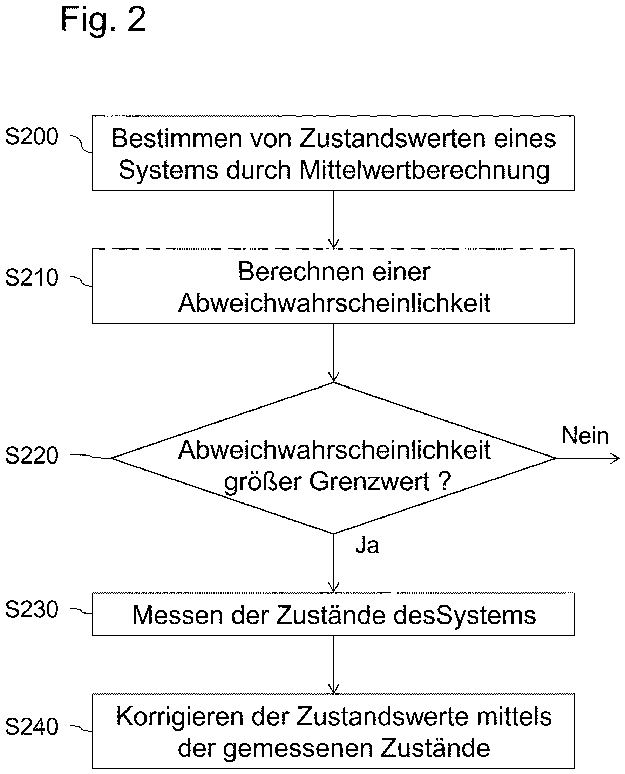

FIG. 2 zeigt ein Flussdiagramm einer Ausführungsform eines Verfahrens zur Bestimmung von Zustandswerten eines Systems.

Bei S200 werden Zustandswerte eines Systems durch Berechnen eines Mittelwerts einer Wahrscheinlichkeitsverteilung für die Zustände bestimmt. Es werden also Zustandswerte basierend auf einer Wahrscheinlichkeitsverteilung geschätzt. Dazu wird ein Schätzfilter, wie zum Beispiel ein Kalman-Filter, verwendet. Die Wahrscheinlichkeitsverteilung für die zu schätzenden Zustandswerte ergibt sich dabei aus vorherigen mit Messfehlern behafteten Messungen der Zustände.

Basierend auf der Schätzung wird eine Abweichwahrscheinlichkeit berechnet. Die Abweichwahrscheinlichkeit ist dabei umso größer, je größer die Wahrscheinlichkeit ist, dass die Zustandswerte von den tatsächlichen Zuständen des Systems abweichen. Je größer die Abweichwahrscheinlichkeit ist, desto weniger genau ist die Schätzung und desto geringer ist eine Güte der Schätzung. Die Güte der Schätzung muss also verbessert werden, sobald die Abweichwahrscheinlichkeit zu groß wird.

Gemäß einer weiteren Ausführungsform wird aus der Abweichwahrscheinlichkeit ein Gütewert berechnet, der für eine große Wahrscheinlichkeit von großen Abständen der Zustandswerte von den tatsächlichen Zuständen klein ist. Das heißt je kleiner der Gütewert ist, desto geringer ist die Güte der Schätzung. Dann muss die Güte verbessert werden, wenn der Gütewert zu klein wird.

Bei S220 wird die Abweichwahrscheinlichkeit mit einem Grenzwert verglichen. Es wird bestimmt, ob die Abweichwahrscheinlichkeit größer als der Grenzwert ist. Ist dies nicht der Fall (Nein), wird keine Korrektur der Zustandswerte vorgenommen. Alternativ wird der Gütewert verglichen. Dann entfällt eine Korrektur, wenn der Gütewert genügend groß ist.

Für den Fall, dass die Abweichwahrscheinlichkeit größer als der Grenzwert ist (Ja), werden die Zustände des Systems erneut gemessen und die Zustandswerte mittels der gemessenen Zustände korrigiert. Gemäß einer weiteren Ausführungsform werden die Zustände des Systems bereits zuvor gemessen und erst dann zur Korrektur der Zustandswerte benutzt, wenn festgestellt wurde, dass die Abweichwahrscheinlichkeit größer als der Grenzwert ist.

Mit diesem Verfahren wird gewährleistet, dass Zustandswerte nur im nötigen Fall korrigiert werden. Dadurch wird es möglich, eine mit der Schätzung und Korrektur befasste Recheneinheit, z.B. einen Computer oder Prozessor, zu entlasten und somit den Energieverbrauch zu reduzieren.

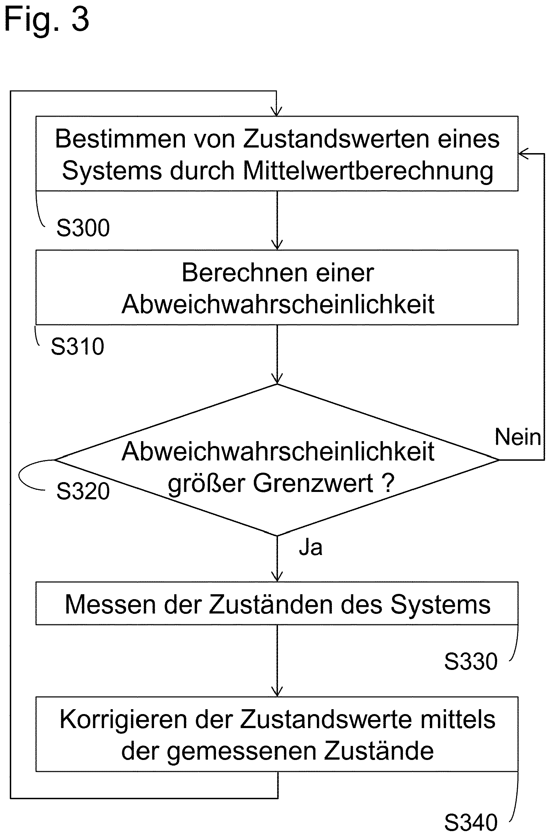

FIG. 3 zeigt ein schematisches Flussdiagramm einer weiteren Ausführungsform eines Verfahrens zum Bestimmen von Zuständen eines Systems.

Das Verfahren gemäß FIG. 3 entspricht weitestgehend dem Verfahren nach FIG. 2. Es werden deshalb nur die Schritte des Verfahrens näher erläutert, die sich unterscheiden.

Die Verfahren unterscheiden sich darin, dass beim Verfahren gemäß FIG. 3 die Zustandswerte in einem Schritt S300 iterativ geschätzt werden. Ist nämlich die Abweichwahrscheinlichkeit größer als der Grenzwert, werden, wie in dem in FIG. 2 beschriebenen Verfahren, die Zustandswerte mittels weiterer gemessener Zustände korrigiert. Daraufhin werden die korrigierten Zustände benutzt, um in einem weiteren Zeitschritt erneut Zustandswerte zu schätzen, die auf den korrigierten Zustandswerten des vorherigen Zeitschritts basieren.

Ist dagegen die Abweichwahrscheinlichkeit nicht größer als der Grenzwert, wird der Korrekturschritt übersprungen und die Zustandswerte werden im folgenden Zeitschritt basierend auf den nicht korrigierten, im vorherigen Zeitschritt bestimmten Zustandswerten geschätzt.

Dadurch ist es möglich, eine Reihe von Schätzungen vorzunehmen, ohne dazwischen Korrekturschritte auszuführen. Solange die iterativ bestimmten Schätzwerte eine Güte aufweisen, die groß genug ist, kann auf die Korrektur der Schätzung verzichtet werden. Erst wenn nach einer gewissen Zeit aufgrund von Messfehlern oder aufgrund anderer Ursachen die Güte unter eine vorbestimmte Schwelle sinkt, wird ein Korrekturschritt eingeschaltet, der die Güte der Schätzung in den erlaubten Bereich zurückbringt. Es ist somit möglich, über den Grenzwert die Anzahl und Häufigkeit von rechenintensiven Korrekturschritten zu begrenzen, so dass Auslastung und Energieverbrauch eines mit der Schätzung betrauten Prozessors reduziert werden.

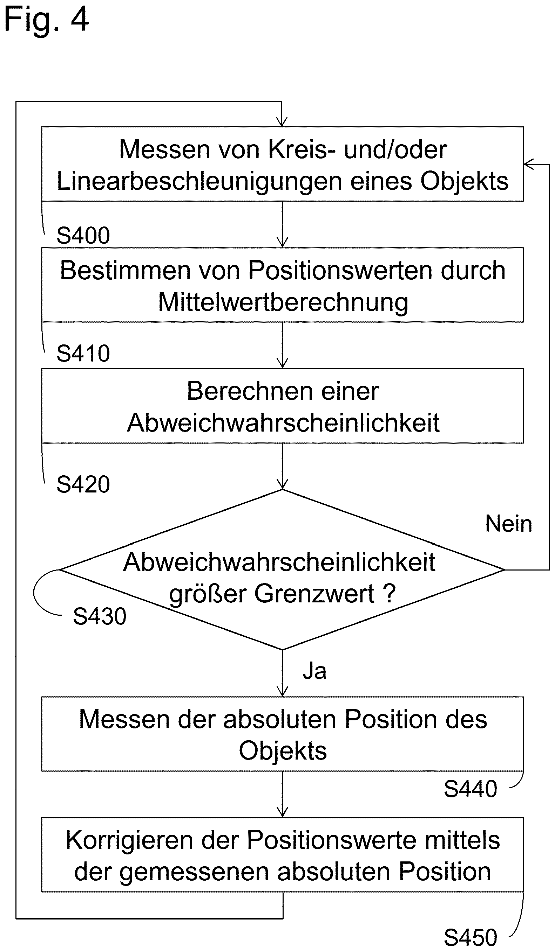

FIG. 4 zeigt ein schematisches Flussdiagramm einer Ausführungsform eines erfindungsgemäßen Verfahrens, in dem als Zustand eines Systems eine Position eines Objekts, etwa eines Fahrzeugs, Schiffs oder Flugzeugs, bestimmt wird.

Dazu wird bei S400 die Drehrate und/oder die Linearbeschleunigung des Objekts gemessen. Dies geschieht zum Beispiel mit einem Inertialsensor, etwa einem Mikro-Elektro-Mechanischen Sensor oder mit als faseroptischen Kreiseln oder Ringlaserkreiseln ausgebildeten Drehratensensoren. Diese relativen Positionsänderungen gehen bei S410 in ein Kalman-Filter ein, in dem Positionswerte durch Berechnen eines Mittelwerts einer Wahrscheinlichkeitsverteilung für die Position bestimmt werden.

Zudem wird bei S420 eine Abweichwahrscheinlichkeit berechnet, d.h. die Wahrscheinlichkeit für eine Abweichung der Positionswerte von der tatsächlichen Position. Diese Abweichwahrscheinlichkeit wird bei S430 mit einem Grenzwert verglichen. Ist die Abweichwahrscheinlichkeit größer (Ja) als der vorher bestimmte Grenzwert, erfolgt eine Korrektur der zuvor geschätzten Positionswerte.

Bei S440 wird die absolute Position des Objekts gemessen. Dazu wird zum Beispiel ein Satellitennavigationssystem verwendet, dass die Position des Objekts mit Bezug auf ein festes Referenzsystem, wie etwa die Breiten- und Längengrade der Erde, angibt. Bei S450 wird der Positionswert mittels der gemessenen absoluten Position korrigiert. Die korrigierten Positionswerte dienen als Ausgangspunkt für die Schätzung der Position im nächsten Zeitschritt.

Wird bei S430 festgestellt, dass die Abweichwahrscheinlichkeit nicht größer als der Grenzwert ist, entfällt die Korrektur der Positionswerte und das Kalman-Filter geht direkt zur nächsten Schätzung über, die dann auf den im vorherigen Zeitschritt bestimmten Positionswerten und den neu gemessenen relativen Positionsänderungen basiert.

Mit diesem Verfahren ist es möglich, Daten aus Inertialmessungen und absoluten Positionsmessungen in einem Kalman-Filter derart zu kombinieren, dass ein Korrekturschritt nur dann ausgeführt wird, wenn die Güte der Schätzung zu gering wird. Dadurch wird gewährleistet, dass rechenintensive Korrekturschritte nur dann ausgeführt werden, wenn sie wirklich notwendig sind, wodurch die Auslastung von Prozessoren und damit der Energieverbrauch verringert werden kann.

## Patentansprüche

1. Verfahren zum Bestimmen von Zuständen eines Systems mittels eines Schätzfilters, umfassend:
Bestimmen von ersten Zustandswerten durch Berechnen von Mittelwerten von jeweiligen Wahrscheinlichkeitsverteilungen für jeden der Zustände durch das Schätzfilter;
Berechnen einer Abweichwahrscheinlichkeit dafür, dass die ersten Zustandswerte von den tatsächlichen Zuständen des Systems abweichen, durch das Schätzfilter;
Messen der Zustände des Systems als Zustandsdaten; und
dann, wenn die Abweichwahrscheinlichkeit größer als ein Grenzwert ist, Korrigieren der ersten Zustandswerte mittels der Zustandsdaten.

2. Verfahren nach Anspruch 1, wobei
die ersten Zustandswerte in einem ersten Zeitschritt bestimmt werden;
dann, wenn die Abweichwahrscheinlichkeit kleiner oder gleich dem Grenzwert ist, in einem dem ersten Zeitschritt folgenden zweiten Zeitschritt zweite Zustandswerte basierend auf den ersten Zustandswerten bestimmt werden; und
dann, wenn die Abweichwahrscheinlichkeit größer als der Grenzwert ist, in dem zweiten Zeitschritt die zweiten Zustandswerte basierend auf den korrigierten ersten Zustandswerten bestimmt werden.

3. Verfahren nach einem der vorherigen Ansprüche, wobei
der Schätzfilter ein Kalman-Filter ist;
die Zustände des Systems eine Position eines Objekts bestimmen;
die Zustandswerte Positionswerte sind, die die Position angeben; und
die gemessenen Zustandsdaten Positionsdaten sind.

4. Verfahren nach Anspruch 3, wobei
die Positionsdaten eine absolute Position des Objekts und relative Positionsänderungen des Objekts umfassen;
die relativen Positionsänderungen verwendet werden, um den Mittelwert der Wahrscheinlichkeitsverteilung für die Position zu bestimmen; und
die absolute Position verwendet wird, um Positionswerte zu korrigieren.

5. Verfahren nach einem der Ansprüche 3 bis 4, wobei
die Positionsdaten mittels eines Satellitennavigationssystems und eines Linearbeschleunigungs- und/oder Drehratensensors gemessen werden.

6. Verfahren nach einem der Ansprüche 3 bis 5, wobei
zum Messen der Positionsdaten ein mikro-elektro-mechanischer Sensor (MEMS), ein faseroptischer Sensor oder ein Ringlaserkreisel verwendet wird.

7. Verfahren nach einem der vorherigen Ansprüche, wobei die Abweichwahrscheinlichkeit basierend auf einer Kovarianzmatrix der Wahrscheinlichkeitsverteilung bestimmt wird.

8. Verfahren nach einem der vorherigen Ansprüche, wobei die Abweichwahrscheinlichkeit basierend auf zumindest einem Residuum bestimmt wird.

9. Vorrichtung (100) zum Bestimmen einer Position eines Objekts, umfassend
eine Messeinheit (110) geeignet zum Messen von Positionsdaten; und
eine Recheneinheit (150) mit einem Schätzfilter geeignet zum
Bestimmen von ersten Positionswerten durch Berechnen von Mittelwerten von jeweiligen Wahrscheinlichkeitsverteilungen für die Position durch das Schätzfilter;
Berechnen einer Abweichwahrscheinlichkeit dafür, dass die ersten Positionswerte von der tatsächlichen Position des Objekts abweichen, durch das Schätzfilter; und
dann, wenn die Abweichwahrscheinlichkeit größer als ein Grenzwert ist, Korrigieren der ersten Positionswerte mittels der Positionsdaten.

10. Vorrichtung (100) nach Anspruch 9, wobei
die Messeinheit (110) ein Satellitennavigationssystems (120) und einen Linearbeschleunigungs- und/oder Drehratensensor (130) umfasst;
der Linearbeschleunigungs- und/oder Drehratensensor (130) geeignet ist, relative Positionsänderungen zu messen, die verwendet werden, um den Mittelwert der Wahrscheinlichkeitsverteilung für die Position zu bestimmen; und wobei
das Satellitennavigationssystem (120) geeignet ist, eine absolute Position zu messen, die verwendet wird, um Positionswerte zu korrigieren.

11. Unbemanntes Luftfahrzeug mit einer Vorrichtung gemäß Anspruch 9 oder 10.

## Claims

1. A method for determining states of a system by means of an estimation filter, comprising:
determining, by the estimation filter, of first state values by calculating mean values of respective probability distributions for each of the states;
calculating, by the estimation filter, a probability for deviation for the case that the first state values deviate from the actual states of the system;
measuring the states of the system as state data; and
then, if the probability for deviation is larger than a threshold, correcting the first state values by means of the state data.

2. The method according to claim 1, wherein
the first state values are determined in a first time increment;
then, if the probability for deviation is equal or smaller than the threshold, second state values are determined based on the first state values in a second time increment that follows the first time increment; and
then, if the probability for deviation is larger than the threshold, the second state values are determined in the second time increment based on the corrected first state values.

3. The method according to one of the preceding claims, wherein
the estimation filter is a Kalman filter;
the states of the system determine a position of an object;
state values are position values, which indicate the position; and
the measured state data are position data.

4. The method according to claim 3, wherein
the position data comprise an absolute position of the object and relative position changes of the object;
the relative position changes are used to determine the mean value of the probability distribution for the position; and
the absolute position is used to correct position values.

5. The method according to one of claims 3 to 4, wherein
the position data are measured by means of a satellite navigation system and a linear acceleration sensor and/or rotation rate sensor.

6. The method according to one of claims 3 to 5, wherein
a micro electro-mechanical sensor (MEMS), a fiber optic sensor, or a ring laser gyroscope are used for measuring the position data.

7. The method according to one of the preceding claims, wherein the probability for deviation is determined based on a covariance matrix of the probability distribution.

8. The method according to one of the preceding claims, wherein the probability for deviation is determined based on at least one residuum.

9. A device for determining a position of an object, comprising
a measurement unit (110) configured to measure position data; and
a calculation unit (150) having an estimation filter that is configured to
determine, by the estimation filter, first position values by calculating mean values of respective probability distributions for the position;
calculate, by the estimation filter, a probability for deviation for the case that the first position values deviate from the actual position of the object; and
then, if the probability for deviation is larger than a threshold, correct the first position values by means of the position data.

10. The device (100) according to claim 9, wherein
the measurement unit (110) comprises a satellite navigation system (120) and a linear acceleration sensor and/or rotation rate sensor (130);
the linear acceleration sensor and/or rotation rate sensor (130) is configured to measure relative position changes that are used to determine the mean value of the probability distribution for the position; and wherein
the satellite navigation system is configured to measure an absolute position that is used to correct the position values.

11. An unmanned aerial vehicle comprising a device according to claims 9 or 10.

## Revendications

1. Procédé pour la détermination d'états d'un système au moyen d'un filtre d'estimation, comprenant :
la détermination de premières valeurs d'état par calcul de valeurs moyennes de lois de probabilité respectives pour chacun des états par le filtre d'estimation ;
le calcul d'une probabilité d'écart pour que les premières valeurs d'état divergent des états réels du système, par le filtre d'estimation ;
la mesure des états du système en tant que données d'état ; et
puis, lorsque la probabilité d'écart est supérieure à une valeur limite, la correction des premières valeurs d'état au moyen des données d'état.

2. Procédé selon la revendication 1, dans lequel
les premières valeurs d'état sont déterminées dans un premier incrément de temps ;
puis, lorsque la probabilité d'écart est inférieure ou égale à la valeur limite, dans un deuxième incrément de temps suivant le premier incrément de temps, des deuxièmes valeurs d'état sont déterminées sur la base des premières valeurs d'état ; et
puis, lorsque la probabilité d'écart est supérieure à la valeur limite, dans le deuxième incrément de temps, les deuxièmes valeurs d'état sont déterminées sur la base des premières valeurs d'état corrigées.

3. Procédé selon l'une des revendications précédentes, dans lequel
le filtre d'estimation est un filtre de Kalman ;
les états du système déterminent une position d'un objet ;
les valeurs d'état sont des valeurs de position, qui indiquent la position ; et
les données d'état mesurées sont des données de position.

4. Procédé selon la revendication 3, dans lequel
les données de position comprennent une position absolue de l'objet et des changements de position relatifs de l'objet ;
les changements de position relatifs sont utilisés pour déterminer la valeur moyenne de la loi de probabilité pour la position ; et
la position absolue est utilisée pour corriger des valeurs de position.

5. Procédé selon l'une des revendications 3 à 4, dans lequel
les données de position sont mesurées au moyen d'un système de navigation par satellite et d'un capteur d'accélération linéaire et/ou de vitesse de rotation.

6. Procédé selon l'une des revendications 3 à 5, dans lequel
un capteur micro-électromécanique (MEMS), un capteur à fibre optique ou un gyrolaser annulaire est utilisé pour la mesure des données de position.

7. Procédé selon l'une des revendications précédentes, dans lequel la probabilité d'écart est déterminée sur la base d'une matrice de covariance de la loi de probabilité.

8. Procédé selon l'une des revendications précédentes, dans lequel la probabilité d'écart est déterminée sur la base d'au moins un résidu.

9. Dispositif (100) pour la détermination d'une position d'un objet, comprenant
une unité de mesure (110) adaptée pour la mesure de données de position ; et
une unité de calcul (150) avec un filtre d'estimation adaptée pour
la détermination de premières valeurs de position par calcul de valeurs moyennes de lois de probabilité respectives pour la position par le filtre d'estimation ;
le calcul d'une probabilité d'écart pour que les premières valeurs de position divergent de la position réelle de l'objet, par le filtre d'estimation ; et
puis, lorsque la probabilité d'écart est supérieure à une valeur limite, la correction des premières valeurs de position au moyen des données de position.

10. Dispositif (100) selon la revendication 9, dans lequel
l'unité de mesure (110) comprend un système de navigation par satellite (120) et un capteur d'accélération linéaire et/ou de vitesse de rotation (130) ;
le capteur d'accélération linéaire et/ou de vitesse de rotation (130) est adapté pour mesurer des changements de position relatifs, qui sont utilisés pour déterminer la valeur moyenne de la loi de probabilité pour la position ; et dans lequel
le système de navigation par satellite (120) est adapté pour mesurer une position absolue qui est utilisée pour corriger des valeurs de position.

11. Drone avec un dispositif selon la revendication 9 ou 10.
